# EUROPEAN PATENT APPLICATION

(11) **EP 3 832 909 A1**
(43) Date of publication of application: **09.06.2021**
(21) Application number: 19853063.6
(22) Date of filing: 19.08.2019
(51) Int. Cl.: H04B 10/2513

(54) **DISPERSION COMPENSATION METHOD AND DEVICE, AND STORAGE MEDIUM**

(30) Priority: 20.08.2018 CN 201810946233
(71) Applicant: HUAWEI TECHNOLOGIES CO., LTD., Shenzhen, Guangdong 518129 (CN)
(72) Inventor: ZHOU, Jie, Shenzhen, Guangdong 518129 (CN); ZHANG, Qiang, Shenzhen, Guangdong 518129 (CN)
(74) Representative: Isarpatent
(86) International application number: PCT/CN2019/101400
(87) International publication number: WO 2020/038336

(57) **Abstract**

This application provides a dispersion compensation method, an apparatus, and a storage medium. The method includes: obtaining, by a transmit end, a subcarrier allocation result, where the subcarrier allocation result includes subcarriers allocated to at least two receive ends based on signal-to-noise ratio results of signals transmitted between the transmit end and at least two receive ends; compensating, by the transmit end, based on a correspondence between a communication distance and dispersion compensation value, a subcarrier allocated to each receive end for a dispersion compensation value corresponding to a first communication distance and, to obtain a compensated signal; adding, by the transmit end, a cyclic prefix CP to the compensated signal; compensating, by the transmit end, a frequency-domain subcarrier corresponding to the signal to which the CP has been added, for the dispersion compensation value corresponding to a second communication distance. In this application, not only CP overheads can be reduced and a system rate can be improved, but also compensation can be made with different dispersion compensation values for different transmission distances, to precisely compensate for link dispersion, effectively alleviate a fading phenomenon caused by fiber dispersion, and help improve performance of an optical communications system.

## Description

This application claims priority to Chinese Patent Application No. 201810946233.9, filed with the China National Intellectual Property Administration on August 20, 2018, and entitled "DISPERSION COMPENSATION METHOD AND APPARATUS, AND STORAGE MEDIUM", which is incorporated herein by reference in its entirety.

### TECHNICAL FIELD

Embodiments of this application relate to the field of fiber optic communications technologies, and in particular, to a dispersion compensation method and apparatus, and a storage medium.

### BACKGROUND

With rapid development of mobile internet applications (for example, a high-definition video, 3D live broadcast, and virtual reality), there is an increasingly high requirement on system performance of short-range optical communication. For short-range optical communication, component costs and power consumption are main factors affecting system performance. Currently, in short-range optical communication, a direct detection technology is more widely used. In the direct detection technology, information is carried in light intensity and then is transmitted to a receive end, so that after receiving an optical signal, the receive end converts the optical signal into an electrical signal.

When the direct detection technology is used in short-range optical communication, a problem of fiber dispersion needs to be considered. To be specific, an optical signal sent by a transmit end arrives at a receive end through fiber transmission, and dispersion generated during fiber transmission causes power fading to an electrical signal obtained by the receive end through conversion. Currently, a common method for resolving the problem of fiber dispersion is as follows: The transmit end makes compensation with a preconfigured dispersion compensation value for an electrical signal, converts the compensated electrical signal into an optical signal, and sends the optical signal to the receive end, to resolve the problem of fiber dispersion.

However, in an application scenario in which one transmit end communicates with a plurality of receive ends, because communication distances between the transmit end and the different receive ends are different, generated dispersion is different, and different dispersion compensation values are needed. As a result, when compensation is made with a same dispersion compensation value for different communication distances, over-compensation or under-compensation may be made for signals sent to some receive ends, and power fading still occurs in the signals received by the receive ends, severely affecting system performance.

### SUMMARY

This application provides a dispersion compensation method and apparatus, and a storage medium, so that not only compensation can be made with different dispersion values for different transmission distances, so that power fading does not occur in signals received by different receive ends, to improve system performance, but also cyclic prefix (Cyclic Prefix, CP) overheads can be reduced.

According to a first aspect, an embodiment of this application provides a dispersion compensation method, where the method is applied to a transmit end, the transmit end communicates with at least two receive ends, communication distances between the transmit end and the at least two receive ends are different, the communication distance between the transmit end and each receive end includes a first communication distance and a second communication distance, and the method includes:
obtaining, by the transmit end, a subcarrier allocation result, where the subcarrier allocation result includes subcarriers allocated to the at least two receive ends based on signal-to-noise ratio results of signals transmitted between the transmit end and the at least two receive ends;
compensating, by the transmit end, based on a correspondence between a communication distance and a dispersion compensation value, for a subcarrier allocated to each receive end for a dispersion compensation value corresponding to the first communication distance, to obtain a compensated signal;
adding, by the transmit end, a cyclic prefix CP to the compensated signal; and
compensating, by the transmit end, a frequency-domain subcarrier corresponding to the signal to which the CP has been added, for a dispersion compensation value corresponding to the second communication distance.

In the foregoing solution, after the communication distance from the transmit end to each receive end is divided into the first communication distance and the second communication distance, the subcarrier allocated to each receive end is compensated for with the dispersion compensation value corresponding to the first communication distance, based on the correspondence between a communication distance and a dispersion compensation value, and after the CP is added to the compensated signal, the frequency-domain subcarrier corresponding to the signal to which the CP has been added is compensated for with the dispersion compensation value corresponding to the second communication distance, that is, segmented compensation is made for subcarriers with dispersion values.

Because the communication distance between the transmit end and each receive end includes the first communication distance and the second communication distance, the transmit end may make compensation with different dispersion compensation values for different first communication distances, add the CP to each compensated signal, and then compensate, the frequency-domain subcarrier corresponding to the signal to which the CP has been added, for the dispersion compensation value corresponding to the second communication distance. In this way, not only a fading phenomenon caused by fiber dispersion can be effectively alleviated, to increase a system capacity to some extent, reduce a bit error rate, and improve performance of an optical communication system, but also CP overheads can be reduced.

Optionally, the second communication distance is a smallest value in the distances between the receive ends and the transmit end; and
the first communication distance is a distance obtained by subtracting the smallest value from the distance between each receive end and the transmit end.

In this solution, usually, the first communication distance is relatively small, and is usually between 0 km and 80 km, and the second communication distance is relatively large, and is usually between 200 km and 320 km. After the subcarrier allocated to each receive end is compensated for with the dispersion compensation value corresponding to the first communication distance, to obtain the compensated signal, the CP is added to the compensated signal. Therefore, a length of the CP only needs to cover a delay caused by dispersion of the first communication distance, and CP overheads can be reduced as much as possible.

It should be noted that in an actual application, if there is no requirement on CP overheads, the first communication distance may also be set to a relatively large distance.

Optionally, the compensating, by the transmit end, based on a correspondence between a communication distance and a dispersion compensation value, for a subcarrier allocated to each receive end, for a dispersion compensation value corresponding to the first communication distance includes:
determining, by the transmit end based on the correspondence between a communication distance and a dispersion compensation value, the dispersion compensation value corresponding to the first communication distance; and
compensating, by the transmit end in frequency domain, the subcarrier allocated to each receive end for the dispersion compensation value corresponding to the first communication distance.

In the foregoing solution, the first communication distances corresponding to the receive ends are different, and the transmit end can determine, based on the correspondence between a communication distance and a dispersion compensation value, a dispersion compensation value corresponding to each first communication distance, to compensate for the subcarrier. Because compensation is made for each first communication distance with the dispersion value corresponding to the first communication distance, a fading phenomenon caused by fiber dispersion is effectively alleviated, and it helps to improve performance of the optical communication system.

Optionally, the compensated signal is a frequency-domain signal; and
the adding, by the transmit end, a cyclic prefix CP to the compensated signal includes:
performing, by the transmit end, inverse Fourier transform on the frequency-domain signal, to obtain a time-domain signal; and
adding, by the transmit end, the CP to the time-domain signal.

In the foregoing solution, because the CP is added to the compensated signal after compensation is made with the dispersion compensation value corresponding to the first communication distance, and the first communication distance is usually relatively small, CP overheads can be reduced.

Optionally, the compensating, by the transmit end, a frequency-domain subcarrier corresponding to the signal to which the CP has been added, for a dispersion compensation value corresponding to the second communication distance includes:
performing, by the transmit end, Fourier transform on the signal to which the CP has been added, to obtain a frequency-domain signal; and
compensating, by the transmit end in frequency domain, the subcarrier corresponding to the frequency-domain signal for the dispersion compensation value corresponding to the second communication distance.

In the foregoing solution, because the signal to which the CP has been added is a time-domain signal, the transmit end first performs Fourier transform on the signal to which the CP has been added, to obtain the frequency-domain signal, and then compensates, in frequency domain, for the frequency-domain subcarrier corresponding to the frequency-domain signal for the dispersion compensation value corresponding to the second communication distance.

According to a second aspect, an embodiment of this application provides a dispersion compensation apparatus, including:
an obtaining unit, configured to obtain a subcarrier allocation result, where the subcarrier allocation result includes subcarriers allocated to at least two receive ends based on signal-to-noise ratio results of signals transmitted between a transmit end and the at least two receive ends;
a compensation unit, configured to compensate, based on a correspondence between a communication distance and a dispersion compensation value, for a subcarrier allocated to each receive end for a dispersion compensation value corresponding to the first communication distance, to obtain a compensated signal; and
an addition unit, configured to add a cyclic prefix CP to the compensated signal, where
the compensation unit is further configured to compensate a frequency-domain subcarrier corresponding to the signal to which the CP has been added, for a dispersion compensation value corresponding to the second communication distance.

Optionally, the second communication distance is a smallest value in distances between the receive ends and the transmit end.

Optionally, the compensation unit is specifically configured to:
determine, based on the correspondence between a communication distance and a dispersion compensation value, the dispersion compensation value corresponding to the first communication distance; and
compensate, in frequency domain, the subcarrier allocated to each receive end for the dispersion compensation value corresponding to the first communication distance.

Optionally, the compensated signal is a frequency-domain signal; and
the addition unit is specifically configured to:
perform inverse Fourier transform on the frequency-domain signal, to obtain a time-domain signal; and
add the CP to the time-domain signal.

Optionally, the compensation unit is specifically configured to:
perform Fourier transform on the signal to which the CP has been added, to obtain a frequency-domain signal; and
compensate, in frequency domain, the subcarrier corresponding to the frequency-domain signal for the dispersion compensation value corresponding to the second communication distance.

The apparatus provided in the second aspect of this application may be a transmit end, or may be a chip in the transmit end. The transmit end or the chip has a function of implementing the dispersion compensation method in the foregoing aspects or any possible implementation thereof. The function may be implemented by using hardware, or may be implemented by hardware executing corresponding software. The hardware or the software includes one or more units corresponding to the foregoing function.

The transmit end includes a processing unit and a transceiver unit. The processing unit may be a processor, the transceiver unit may be a transceiver, and the transceiver includes a radio frequency circuit. Optionally, the transmit end further includes a storage unit, and the storage unit, for example, may be a memory. When the transmit end includes the storage unit, the storage unit is configured to store a computer executable instruction. The processing unit is connected to the storage unit. The processing unit executes the computer executable instruction stored in the storage unit, to enable the transmit end to perform the dispersion compensation method in the foregoing aspects or any possible possible manner thereof.

The chip includes a processing unit and a transceiver unit. The processing unit may be a processor, and the transceiver unit may be an input/output interface, a pin, a circuit, or the like on the chip. The processing unit may execute a computer executable instruction stored in a storage unit, to enable the chip to perform the dispersion compensation method in the foregoing aspects or any possible possible manner thereof. Optionally, the storage unit may be a storage unit (for example, a register or a buffer) in the chip, or the storage unit may be a storage unit (for example, a read-only memory (read-only memory, ROM)) that is located inside the transmit end and outside the chip, or may be another type of a static storage device (for example, a random access memory (random access memory, RAM)) or the like capable of storing static information and an instruction.

The processor mentioned above may be a central processing unit (central processing unit, CPU), a microprocessor, or an application-specific integrated circuit (application specific integrated circuit, ASIC), or may be one or more integrated circuits configured to control program execution of the dispersion compensation method described in the foregoing aspects or any possible possible manner thereof.

According to a third aspect, an embodiment of this application provides a transmit end, including: a memory and a processor. The memory is configured to store a computer program, and the computer program is run on the processor, to enable the transmit end to implement the dispersion compensation method described in the first aspect.

According to a fourth aspect, an embodiment of this application further provides a computer readable storage medium. The computer readable storage medium stores a computer program, and when the computer program is executed by a processor, the processor performs the dispersion compensation method described in the first aspect.

According to a fifth aspect, an embodiment of this application further provides a computer program product including an instruction. When the computer program product is run on a computer, the computer is enabled to perform the dispersion compensation method provided in the first aspect of the embodiments of this application.

According to a sixth aspect, an embodiment of this application further provides a chip. The chip stores a computer program, and when the computer program is executed by a processor, the processor performs the dispersion compensation method provided in the first aspect.

In the dispersion compensation method and apparatus, and the storage medium that are provided in the embodiments of this application, the transmit end obtains the subcarrier allocation result, where the subcarrier allocation result includes the subcarriers allocated to the at least two receive ends based on the signal-to-noise ratio results of the signals transmitted between the transmit end and the at least two receive ends. Then, the transmit end compensates, based on the correspondence between a communication distance and a dispersion compensation value, for the subcarrier allocated to each receive end for the dispersion compensation value corresponding to the first communication distance, to obtain the compensated signal, adds the CP to the compensated signal, and then compensates, the frequency-domain subcarrier corresponding to the signal to which the CP has been added, for the dispersion compensation value corresponding to the second communication distance. Because the transmit end adds the CP only to the compensated signal obtained after the subcarrier allocated to each receive end is compensated for with the dispersion compensation value corresponding to the first communication distance, but does not add the CP to a signal obtained after the subcarrier allocated to each receive end is compensated for with a dispersion compensation value corresponding to an entire communication distance, not only CP overheads can be reduced and a system rate can be improved, but also compensation can be made with different dispersion compensation values for different transmission distances, to precisely compensate for link dispersion, effectively alleviate a fading phenomenon caused by fiber dispersion, and help to improve performance of the optical communication system.

### BRIEF DESCRIPTION OF DRAWINGS

FIG. 1 is a schematic architectural diagram of a communications system according to an embodiment of this application;
FIG. 2 is a schematic diagram of a signal-to-noise ratio result of an electrical signal obtained through conversion by each of three receive ends in the prior art;
FIG. 3 is a schematic diagram of signal-to-noise ratio results respectively corresponding to three receive ends in the prior art;
FIG. 4 is a schematic diagram of a result of band division performed by a transmit end for three receive ends in the prior art;
FIG. 5 is a schematic structural diagram of a dispersion compensation apparatus in the prior art;
FIG. 6A is a diagram of comparison between signal-to-noise ratios obtained after compensation is made with a dispersion compensation value corresponding to 80 km and a dispersion compensation value corresponding to 40 km for a receive end whose communication distance is 80 km according to an embodiment of this application;
FIG. 6B is a diagram of comparison between signal-to-noise ratios obtained after compensation is made with a dispersion compensation value corresponding to 40 km and a dispersion compensation value corresponding to 80 km for a receive end whose communication distance is 40 km according to an embodiment of this application;
FIG. 6C is a diagram of comparison between signal-to-noise ratios obtained after compensation is made with a dispersion compensation value corresponding to 80 km and a dispersion compensation value corresponding to 60 km for a receive end whose communication distance is 80 km according to an embodiment of this application;
FIG. 6D is a diagram of comparison between signal-to-noise ratios obtained after compensation is made with a dispersion compensation value corresponding to 40 km and a dispersion compensation value corresponding to 60 km for a receive end whose communication distance is 40 km according to an embodiment of this application;
FIG. 7A and FIG. 7B are schematic structural diagrams of an optical communication system according to an embodiment of this application;
FIG. 8A is a schematic structural diagram of a DDMZM according to an embodiment of this application;
FIG. 8B is a schematic diagram of a power modulation curve of a DDMZM according to an embodiment of this application;
FIG. 8C is a schematic structural diagram of an IQMZM according to an embodiment of this application;
FIG. 9 is a schematic flowchart of a dispersion compensation method according to an embodiment of this application;
FIG. 10 is a schematic diagram of a signal-to-noise ratio result of a first receive end and a signal-to-noise ratio result of a second receive end according to an embodiment of this application;
FIG. 11 is a schematic diagram of a subcarrier allocated by a transmit end to a first receive end and a subcarrier allocated by the transmit end to a second receive end according to an embodiment of this application;
FIG. 12 is a diagram of comparison between simulation results of bit error rate-signal-to-noise ratio curves corresponding to a receive end that are obtained after dispersion compensation is performed by using a dispersion compensation method in the prior art and after dispersion compensation is performed by using a dispersion compensation method provided in the embodiments of this application;
FIG. 13 is a diagram of comparison between experimental results of bit error rate-signal-to-noise ratio curves corresponding to a receive end that are obtained after dispersion compensation is performed by using a dispersion compensation method in the prior art and after dispersion compensation is performed by using a dispersion compensation method provided in the embodiments of this application;
FIG. 14 is a schematic structural diagram of a dispersion compensation apparatus 10 according to an embodiment of this application; and
FIG. 15 is a schematic structural diagram of an implementation of a transmit end according to an embodiment of this application.

### DESCRIPTION OF EMBODIMENTS

In the following, some terms in this application are described, to help a person skilled in the art have a better understanding.
1. A signal-to-noise ratio (signal-to-noise ratio, SNR for short) is a parameter that describes a ratio relationship between an effective component and a noise component in a signal.
2. Conjugate signals refer to two signals having a same modulus value but opposite phases.
3. A system requirement refers to a performance requirement preset by a system for a receive end. The performance requirement includes a transmission capacity, a signal-to-noise ratio, a transmission capacity range, a signal-to-noise ratio range, and the like. For example, the preset transmission capacity is 28 Gb/s. When an actual transmission capacity of a receive end is greater than or equal to 28 Gb/s, the receive end meets the system requirement; or otherwise, the receive end does not meet the system requirement. Alternatively, the preset signal-to-noise ratio is 13 dB. When a signal-to-noise ratio of a signal received by a receive end is greater than or equal to 13 dB, the receive end meets the system requirement; or otherwise, the receive end does not meet the system requirement. Alternatively, the preset transmission capacity range is [2, 4] Gb/s. When a difference between transmission capacities of any two receive ends is within the range of [2, 4] Gb/s, the two receive ends meet the system requirement; or otherwise, the two receive ends do not meet the system requirement. Alternatively, the preset signal-to-noise ratio range is [0, 1] dB. When a difference between signal-to-noise ratios of signals received by any two receive ends is within the range of [0, 1] dB, the two receive ends meet the system requirement; or otherwise, the two receive ends do not meet the system requirement, or the like.
4. Units in this application refer to functional units or logical units. The units may be in a form of software, and functions of the units are implemented by a processor executing program code. Alternatively, the units may be in a form of hardware.
5. "A plurality of' means at least two, and the other quantifier is similar to this. The term "and/or" describes an association relationship for describing associated objects and represents that three relationships may exist. For example, A and/or B may represent the following three cases: The scope described in Only A exists, both A and B exist, and only B exists. The character "/" generally indicates an "or" relationship between the associated objects. A range described by "above", "below", or the like includes boundary points.

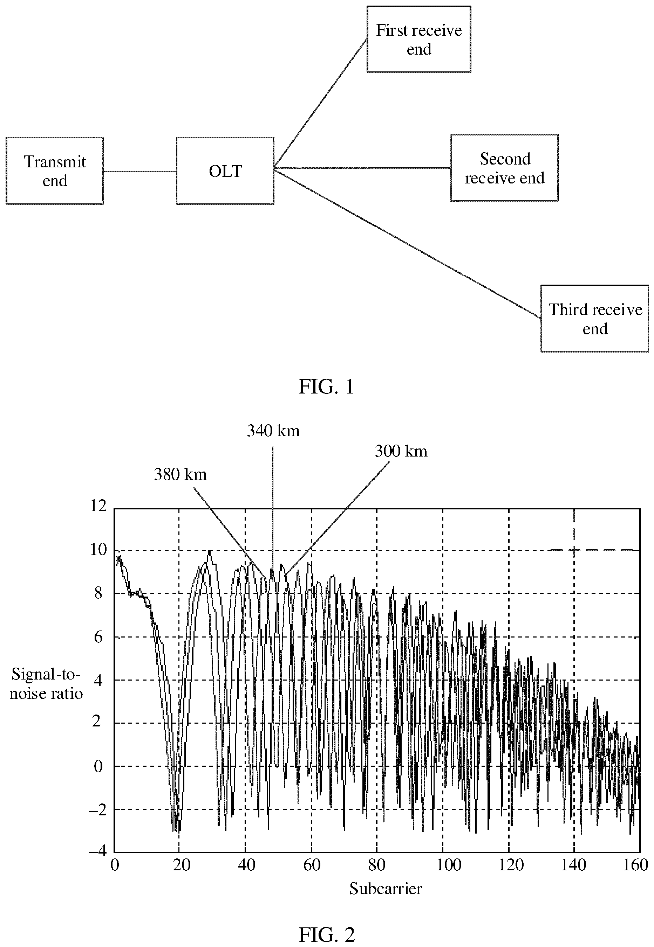

A person skilled in the art may understand that a dispersion compensation method provided in the embodiments of this application may be applied to a communications system in which a transmit end performs data transmission with at least two receive ends. FIG. 1 is a schematic architectural diagram of a communications system according to an embodiment of this application. As shown in FIG. 1, the communications system includes a transmit end, an optical line terminal (optical line terminal, OLT), and at least two receive ends. Communication distances between the transmit end and the receive ends are different. In FIG. 1, one transmit end and three receive ends are used as an example for description. In addition, optionally, the transmit end may be a broadband network gateway control device (broadband network gateway, BNG), and the receive end may be an optical network unit (optical network unit, ONU). The transmit end communicates with the OLT by using an optical fiber, and the OLT communicates with each receive end by using an optical fiber. In addition, because the BNG communicates with all the ONUs by using the optical fiber, in a possible communications system, the OLT may not need to perform signal conversion, thereby reducing costs.

In a process of communication between the transmit end and the receive ends, because power fading occurs due to fiber dispersion, power fading occurs in different cases when communication distances between the transmit end and different receive ends are different.

The communications system shown in FIG. 1 is used as an example, a communication distance between the transmit end and the OLT is 230 km, a communication distance between the OLT and a first receive end is 0, a communication distance between the OLT and a second receive end is 10 km, and a communication distance between the OLT and a third receive end is 20 km. In other words, a communication distance between the transmit end and the first receive end is 230 km, a communication distance between the transmit end and the second receive end is 240 km, a communication distance between the transmit end and the third receive end is 250 km. The transmit end separately sends optical signals to the three receive ends on a plurality of subcarriers included in a carrier whose frequency range is [0, 36] GHz. An optical signal is separately sent to three receive ends on a plurality of subcarriers included in a GHz carrier. The optical signals sent by the transmit end arrive at the three receive ends through fiber transmission, and the three receive ends respectively convert the received optical signals into electrical signals.

FIG. 2 is a schematic diagram of a signal-to-noise ratio result of an electrical signal obtained through conversion by each of the three receive ends in the prior art. As shown in FIG. 2, the signal-to-noise ratio result includes a signal-to-noise ratio value corresponding to each of subcarriers whose subcarrier sequence numbers are [0, 160]. As can be learned from FIG. 2, for a same subcarrier, signal-to-noise ratio values of the receive ends with different communication distances are different. It indicates that for a same subcarrier, power fading statuses corresponding to the receive ends with different communication distances are different.

Currently, there are two commonly used methods for resolving fiber dispersion. In existing solution 1, for receive ends with different communication distances, band division is performed based on whether signal-to-noise ratios of the receive ends exceed a preset threshold. If a signal-to-noise ratio exceeds the preset threshold, it is considered that a band is available, or if a signal-to-noise ratio does not exceed the preset threshold, it is considered that a band is unavailable, to avoid a case in which an optical signal is sent to a receive end on a band having a severe fading status, thereby resolving the problem of fiber dispersion.

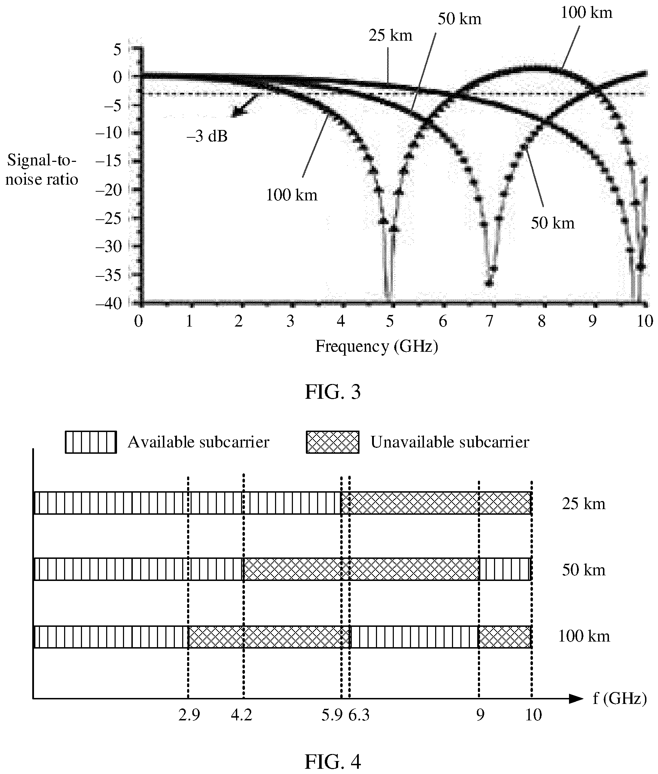

The communications system shown in FIG. 1 and the preset threshold of -3 db are used as an example. A communication distance between the transmit end and the first receive end is 25 km, a communication distance between the transmit end and the second receive end is 50 km, and a communication distance between the transmit end and the third receive end is 100 km. It is assumed that the transmit end may communicate with the receive ends on a carrier band of [0, 10] GHz. FIG. 3 is a schematic diagram of signal-to-noise ratio results respectively corresponding to the three receive ends in the prior art. FIG. 4 is a schematic diagram of a result of band division performed by the transmit end for the three receive ends in the prior art. As shown in FIG. 3 and FIG. 4, for the first receive end, a band corresponding to a signal-to-noise ratio value greater than -3 db is [0, 5.9] GHz; and therefore, the first receive end may use the band [0, 5.9] GHz. Similarly, the second receive end may use bands [0, 4.2] GHz and [9, 10] GHz, but cannot use a band [4.2, 9] GHz. The third receive end may use bands [0, 2.9] GHz and [6.3, 9] GHz, but cannot use bands [2.9, 6.3] GHz or [9, 10] GHz.

However, when the problem of fiber dispersion is resolved by using a method that the transmit end allocates different subcarriers to receive ends with different communication distances, if all signal-to-noise ratios of the transmit end on some subcarriers are less than a preset threshold, these subcarriers are unavailable. The signal-to-noise ratio results shown in FIG. 3 and the band division result shown in FIG. 4 are used as an example. Because a signal-to-noise ratio value of the first receive end on a band [5.9, 6.3] GHz is less than -3 db, the first receive end cannot use the band [5.9, 6.3] GHz. Because a signal-to-noise ratio value of the second receive end on the band [5.9, 6.3] GHz is also less than -3 db, the second receive end cannot use the band [5.9, 6.3] GHz either. Because a signal-to-noise ratio value of the third receive end on the band [5.9, 6.3] GHz is also less than -3 db, the third receive end cannot use the band [5.9, 6.3] GHz either. Therefore, the band [5.9, 6.3] GHz is unavailable, resulting in a waste of resources.

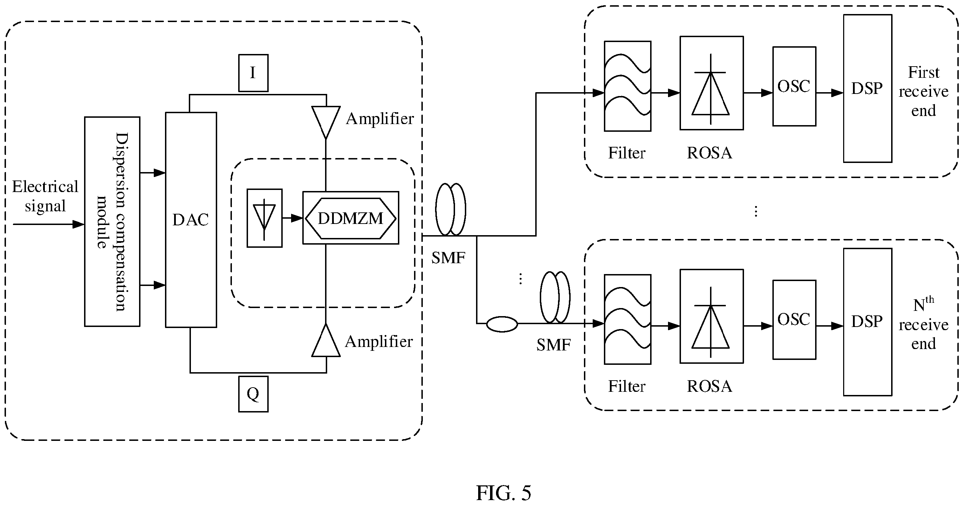

In addition to existing solution 1, there is still existing solution 2 that is commonly used to resolve the problem of fiber dispersion. The transmit end makes compensation with a preconfigured dispersion compensation value for an electrical signal, then converts the compensated electrical signal into an optical signal, and sends the optical signal to a receive end, to resolve the problem of fiber dispersion. FIG. 5 is a schematic structural diagram of a dispersion compensation apparatus in the prior art. As shown in FIG. 5, the transmit end makes compensation with the preconfigured dispersion compensation value for the electrical signal by using a dispersion compensation module, and then converts the electrical signal on which dispersion compensation has been performed into the optical signal by using a digital-to-analog converter (digital to analog converter, DAC for short) and a parallel dual-drive Mach-Zehnder modulator (dual-drive mach-zehnder modulator, DDMZM for short). The transmit end sends the optical signal obtained through conversion to the receive end by using a single mode fiber (single mode fiber, SMF for short), so that after receiving the optical signal, the receive end converts the optical signal into the electrical signal by using a filter, an optical receiver module (receiver optical sub assembly, ROSA for short), an oscilloscope (oscilloscope, OSC for short), and a digital signal processor(digital signal processor, DSP for short).

However, in an application scenario in which one transmit end communicates with a plurality of receive ends, because communication distances between the transmit end and different receive ends are different, corresponding dispersion is different, and different dispersion compensation values are needed. As a result, when compensation is made with a same dispersion compensation value for different communication distances, over-compensation or under-compensation may be caused to signals sent to some receive ends. As a result, power fading still occurs in the signals received by these receive ends, severely affecting system performance.

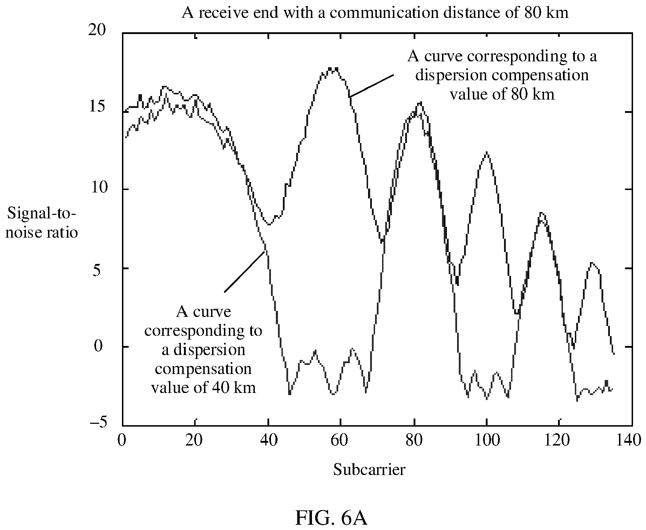

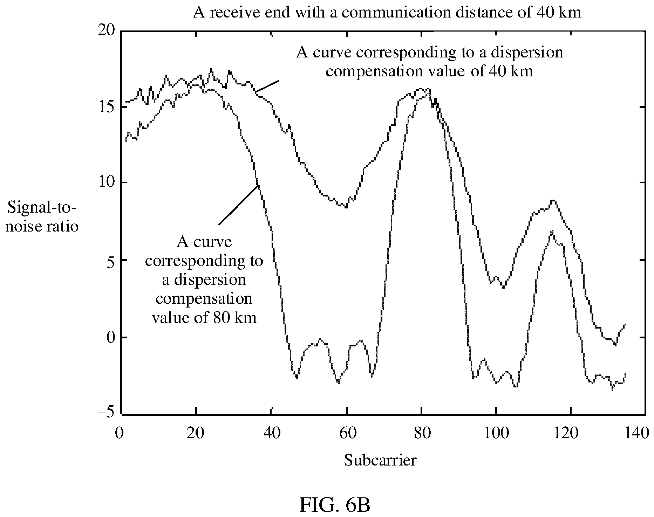

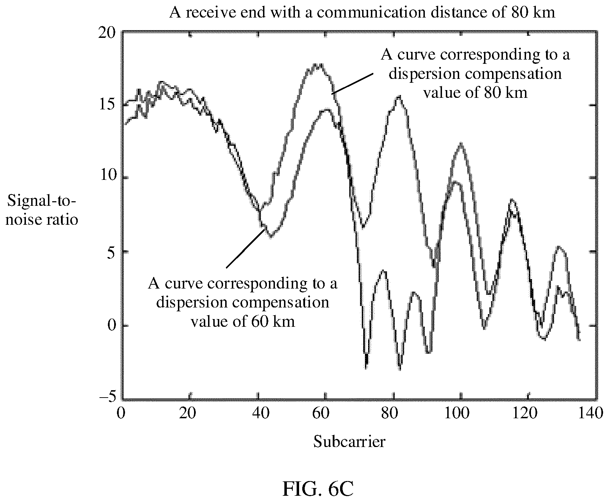

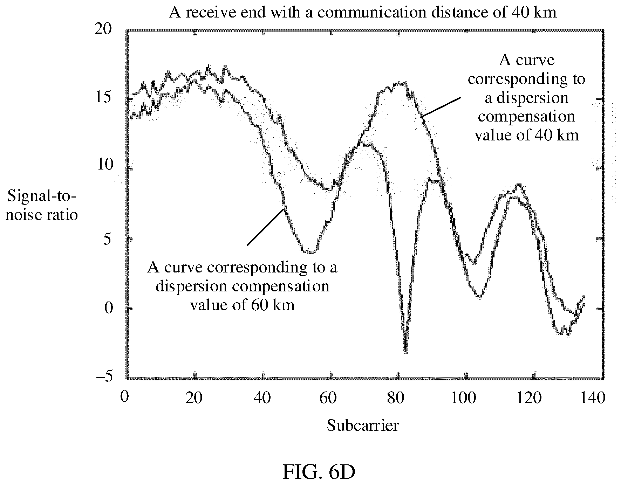

For example, a communication distance between the transmit end and the first receive end is 80 km, and a communication distance between the transmit end and the second receive end is 40 km. Compensation is made with a same dispersion compensation value for the first receive end and the second receive end. When the dispersion compensation value used for compensation is a dispersion compensation value corresponding to 40 km, as shown in FIG. 6A, a signal-to-noise ratio result of a signal received by the first receive end after compensation is made with the dispersion compensation value corresponding to 40 km is compared with a signal-to-noise ratio result of a signal received by the first receive end after compensation is made with a dispersion compensation value corresponding to 80 km. It can be learned that when compensation is made with the dispersion compensation value corresponding to 40 km for the first receive end, due to under-compensation, power fading still occurs in the signal received by the first receive end. When the dispersion compensation value used for compensation is the dispersion compensation value corresponding to 80 km, as shown in FIG. 6B, a signal-to-noise ratio result of a signal received by the second receive end after compensation is made with the dispersion compensation value corresponding to 40 km is compared with a signal-to-noise ratio result of a signal received by the second receive end after compensation is made with the dispersion compensation value corresponding to 80 km. It can be learned that when compensation is made with the dispersion compensation value corresponding to 80 km for the second receive end, due to over-compensation, power fading still occurs in the signal received by the second receive end. When the dispersion compensation value used for compensation is a dispersion compensation value corresponding to 60 km, as shown in FIG. 6C, a signal-to-noise ratio result of a signal received by the first receive end after compensation is made with the dispersion compensation value corresponding to 60 km is compared with a signal-to-noise ratio result of a signal received by the first receive end after compensation is made with the dispersion compensation value corresponding to 80 km. It can be learned that when a signal sent to the first receive end is compensated for with the dispersion compensation value corresponding to 60 km, power fading still occurs in the signal received by the first receive end. In addition, as shown in FIG. 6D, a signal-to-noise ratio result of a signal received by the second receive end after compensation is made with the dispersion compensation value corresponding to 40 km is compared with a signal-to-noise ratio result of a signal received by the second receive end after compensation is made with the dispersion compensation value corresponding to 60 km. It can be learned that when a signal sent to the second receive end is compensated for with the dispersion compensation value corresponding to 60 km, power fading still occurs in the signal received by the second receive end.

In consideration of these cases, an embodiment of this application provides a dispersion compensation method. A transmit end obtains a subcarrier allocation result, where the subcarrier allocation result includes subcarriers allocated to at least two receive ends based on signal-to-noise ratio results of signals transmitted between the transmit end and the at least two receive ends. Then, the transmit end compensates, based on a correspondence between a communication distance and a dispersion compensation value, for a subcarrier allocated to each receive end for a dispersion compensation value corresponding to a first communication distance, to obtain a compensated signal, and adds a cyclic prefix CP to the compensated signal. Finally, the transmit end compensates a frequency-domain subcarrier corresponding to the signal to which the CP has been added, for a dispersion compensation value corresponding to a second communication distance. Because a communication distance between the transmit end and each receive end includes the first communication distance and the second communication distance, the transmit end may make compensation with different dispersion compensation values for different first communication distances, and after adding the CP to the compensated signal, compensate, the frequency-domain subcarrier corresponding to the signal to which the CP has been added, for the dispersion compensation value corresponding to the second communication distance. In this way, not only a fading phenomenon caused by fiber dispersion can be effectively alleviated, to increase a system capacity to some extent, reduce a bit error rate, and improve performance of an optical communication system, but also CP overheads can be reduced.

The following further describes in detail the embodiments of this application with reference to the accompanying drawings.

An embodiment of this application provides an optical communication system. The system includes one transmit end and a plurality of receive ends. Communication distances between the transmit end and the plurality of receive ends are different. The optical communication system may be the communications system shown in FIG. 1.

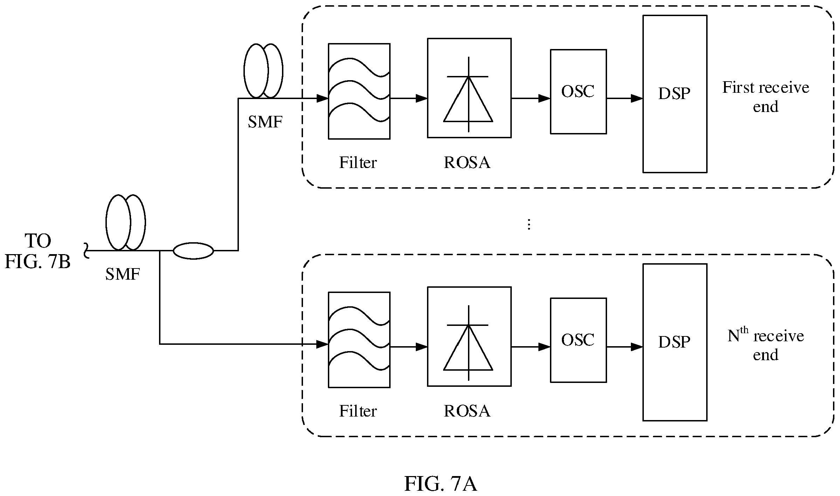

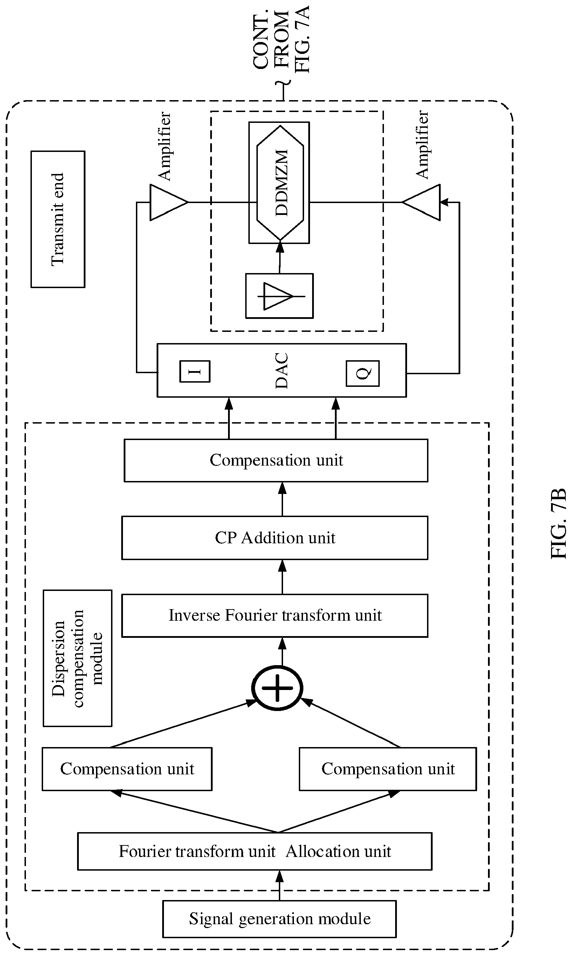

FIG. 7A and FIG. 7B are schematic structural diagrams of an optical communication system according to an embodiment of this application. As shown in FIG. 7A and FIG. 7B, the optical communication system includes a transmit end and N receive ends (for example, a first receive end to an N^{th} receive end), where N is a positive integer greater than 1. In the optical communication system, the transmit end may include a signal generation module, a dispersion compensation module, a digital-to-analog converter (digital to analog converter, DAC for short), and a DDMZM. In another possible implementation, the transmit end may include a signal generation module, a dispersion compensation module, a DAC, and an in-phase quadrature-phase Mach-Zehnder modulator (in-phase quadrature-phase mach-zehnder modulator, IQMZM). In addition, the signal generation module or the dispersion compensation module may be implemented by using one or more general purpose processors.

The signal generation module is configured to generate time-domain signals to be sent to the N receive ends.

Specifically, the signal generation module may generate, in the following manner, the time-domain signal to be sent to the N receive ends:

The signal generation module first generates a binary bit sequence, and then converts the generated binary bit sequence into a frequency-domain signal. When the binary bit sequence is converted into the frequency-domain signal, it is ensured that a positive frequency and a negative frequency of the frequency-domain signal are conjugate signals. Then, the signal generation module converts the frequency-domain signal into a time-domain signal through inverse Fourier transform, where a quantity of sampling points when inverse Fourier transform is performed on the frequency-domain signal may be 512. Finally, the signal generation module adds the time-domain signal obtained through conversion and a synchronization signal, to obtain the time-domain signals to be sent to the N receive ends.

The dispersion compensation module is configured to separately perform dispersion compensation on the time-domain signal to be sent to each receive end.

The DAC is configured to convert the signal on which the dispersion compensation module has performed dispersion compensation into an analog signal.

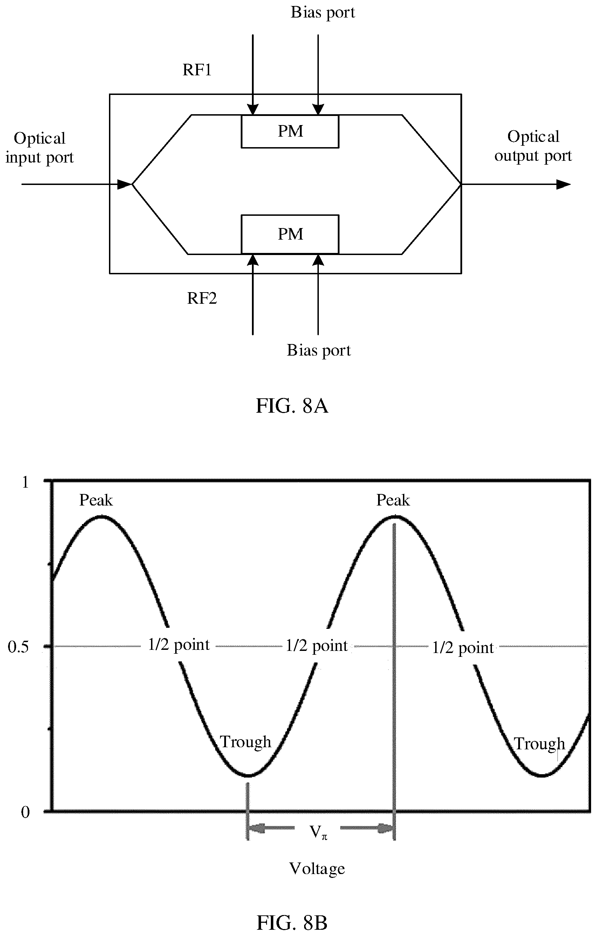

The DDMZM is configured to convert, into an optical signal, the analog signal obtained through conversion by the DAC. FIG. 8A is a schematic structural diagram of the DDMZM provided in this embodiment of this application. The DDMZM includes two parallel phase modulators (phase modulator, PM for short): an upper-arm PM and a lower-arm PM. Each PM includes one radio frequency (radio frequency, RF for short) port and one bias port. A working state of the DDMZM may be controlled by adjusting a voltage difference between the two bias ports included in the two PMs. For example, when a phase difference between voltages of the two bias ports included in the two PMs is π/2, the DDMZM is in an optimal working state. When the two bias ports are adjusted to be biased at a 1/2 point of a power modulation curve, as shown in a power modulation curve shown in FIG. 8B, the DDMZM approximately linearly converts an electrical signal into an optical signal. The DDMZM further includes one optical input port and one optical output port.

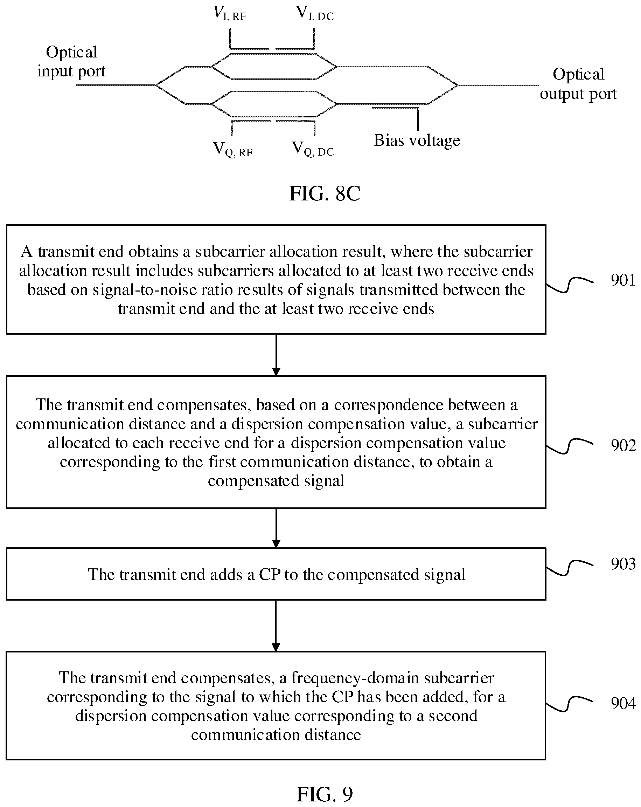

The IQMZM is configured to convert, into an optical signal, the analog signal obtained through conversion by the DAC. FIG. 8C is a schematic structural diagram of the IQMZM provided in this embodiment of this application. The IQMZM includes two parallel MZMs: an upper MZM and a lower MZM. Each MZM includes one radio frequency (VI, Rf and VQ, Rf) port and one direct current power supply port (VI, DC and VQ, DC). In addition, a bias voltage input port is further included, and a working state of the IQMZM may be controlled by adjusting a voltage difference between the two direct current power supply ports included in the two MZMs. The IQMZM further includes one optical input port and one optical output port.

In the optical communication system, each receive end may include a filter, an ROSA, an OSC, and a DSP.

The filter is configured to filter out an out-of-band amplifier spontaneous emission noise (amplifier spontaneous emission noise, ASE for short) in the optical signal received by the receive end.

The ROSA is configured to convert, into an electrical signal, the optical signal from which the ASE noise is filtered out.

The OSC is configured to convert, into a digital signal, the electrical signal obtained through conversion by the ROSA.

The DSP is configured to process the digital signal obtained through conversion by the OSC.

Based on the optical communication system shown in FIG. 7A and FIG. 7B, an embodiment of this application provides a dispersion compensation method. FIG. 9 is a schematic flowchart of the dispersion compensation method provided in this embodiment of this application. As shown in FIG. 9, the dispersion compensation method may be applied to the dispersion compensation module in the transmit end in FIG. 7A and FIG. 7B. The dispersion compensation method may specifically include the following steps:

Step 901: The transmit end obtains a subcarrier allocation result, where the subcarrier allocation result includes subcarriers allocated to at least two receive ends based on signal-to-noise ratio results of signals transmitted between the transmit end and the at least two receive ends.

In this step, the subcarrier allocation result obtained by the transmit end includes the subcarriers allocated to the at least two receive ends based on the signal-to-noise ratio results of the signals transmitted between the transmit end and the at least two receive ends. The transmit end may allocate the subcarriers to the at least two receive ends in a manner in the prior art, provided that the subcarriers allocated to the receive ends can meet a system requirement.

Step 902: The transmit end compensates, based on a correspondence between a communication distance and a dispersion compensation value, for a subcarrier allocated to each receive end for a dispersion compensation value corresponding to a first communication distance, to obtain a compensated signal.

In this embodiment, a communication distance between the transmit end and each receive end includes a first communication distance and a second communication distance. In a possible implementation, the second communication distance may be a smallest value in the distances between the receive ends and the transmit end, and the first communication distance is a distance obtained by subtracting the smallest value from the distance between each receive end and the transmit end. For example, as shown in FIG. 1, it is assumed that a communication distance between the transmit end and an OLT is 230 km, a communication distance between the OLT and a first receive end is 0, a communication distance between the OLT and a second receive end is 10 km, and a communication distance between the OLT and a third receive end is 20 km. In other words, a communication distance between the transmit end and the first receive end is 230 km, a communication distance between the transmit end and the second receive end is 240 km, and a communication distance between the transmit end and the third receive end is 250 km. In this way, the second communication distance between the transmit end and each receive end may be determined as 230 km. In other words, the first communication distance between the transmit end and the first receive end is 0, and the second communication distance is 230 km; the first communication distance between the transmit end and the second receive end is 10 km, and the second communication distance is 230 km; and the first communication distance between the transmit end and the third receive end is 20 km, and the second communication distance is 230 km. In a possible implementation, the second communication distance is a common distance from the transmit end to the at least two receive ends. In other words, the second communication distance is the distance from the transmit end to the OLT in FIG. 1.

Optionally, in an actual application, usually, the first communication distance is relatively small, and is usually between 0 km and 80 km, and the second communication distance is relatively large, and is usually between 200 km and 320 km.

Because after the subcarrier allocated to each receive end is compensated for with the dispersion compensation value corresponding to the first communication distance, to obtain the compensated signal, a CP is added to the compensated signal, a length of the CP only needs to cover a delay caused by dispersion of the first communication distance, thereby reducing CP overheads as much as possible.

It should be noted that in an actual application, if there is no requirement on CP overheads, the first communication distance may also be set to a relatively large distance.

In a specific implementation process, the transmit end may determine, based on the correspondence between a communication distance and a dispersion compensation value, a dispersion compensation value corresponding to each first communication distance, so that the transmit end compensates, in frequency domain, the subcarrier allocated to each receive end for the determined dispersion compensation value corresponding to the first communication distance. For example, a subcarrier allocated to the first receive end may be compensated for with a dispersion compensation value corresponding to 0 km in frequency domain, a subcarrier allocated to the second receive end may be compensated for with a dispersion compensation value corresponding to 10 km in frequency domain, and a subcarrier allocated to the third receive end may be compensated for with a dispersion compensation value corresponding to 20 km in frequency domain, to obtain compensated signals.

Step 903: The transmit end adds the CP to the compensated signal.

Step 904: The transmit end compensates, a frequency-domain subcarrier corresponding to the signal to which the CP has been added, for a dispersion compensation value corresponding to a first communication distance.

Specifically, as a transmission distance increases, if a CP in a signal remains unchanged, system performance is severely affected. Therefore, to improve system performance, a CP length usually needs to be increased. However, when system performance is improved by increasing a CP length, system overheads are increased, and a system rate is reduced.

To resolve this problem, in this embodiment of this application, after compensating, the subcarrier allocated to each receive end for the dispersion compensation value corresponding to the first communication distance, to obtain the compensated signal, the transmit end adds the CP to the compensated signal, and then compensates, the frequency-domain subcarrier corresponding to the signal to which the CP has been added, for the dispersion compensation value corresponding to the second communication distance. The transmit end adds the CP only to the compensated signal that is obtained after the subcarrier allocated to each receive end is compensated for with the dispersion compensation value corresponding to the first communication distance, the first communication distance is usually relatively small, and a time-domain delay of dispersion impact corresponding to the first communication distance is relatively small. Therefore, CP overheads can be reduced, and a system rate can be increased. In addition, because compensation may be made with different dispersion compensation values for different transmission distances, to precisely compensate for link dispersion, a fading phenomenon caused by fiber dispersion is effectively alleviated, and it helps to improve performance of an optical communication system.

For example, in frequency domain, the transmit end compensates, the subcarrier allocated to the first receive end for the dispersion compensation value corresponding to 0 km, compensates, the subcarrier allocated to the second receive end for the dispersion compensation value corresponding to 10 km, compensates, the subcarrier allocated to the third receive end for the dispersion compensation value corresponding to 20 km, then, adds the CP to the compensated signals, and compensates, for all frequency-domain subcarriers corresponding to the signals to which the CP has been added, for the dispersion compensation value corresponding to 230 km.

Further, the compensated signal is a frequency-domain signal, and the transmit end may add the CP to the compensated signal in the following manner:

The transmit end performs inverse Fourier transform on the frequency-domain signal to obtain a time-domain signal, and the transmit end adds the CP to the time-domain signal.

Specifically, the compensated signal obtained after the transmit end compensates, in frequency domain, the subcarrier allocated to each receive end is a frequency-domain signal for the dispersion compensation value corresponding to the first communication distance. The transmit end first performs inverse Fourier transform on the frequency-domain signal to obtain a time-domain signal, and then adds the CP to the time-domain signal.

Because the CP is added to the compensated signal after compensation is made with the dispersion compensation value corresponding to the first communication distance, and the first communication distance is usually relatively small, CP overheads can be reduced.

In addition, after the transmit end adds the CP to the compensated signal, the transmit end may compensate, in the following manner with the dispersion compensation value corresponding to the second communication distance, for the frequency-domain subcarrier corresponding to the signal to which the CP has been added.

The transmit end performs Fourier transform on the signal to which the CP has been added, to obtain the frequency-domain signal, and the transmit end compensates, in frequency domain, the subcarrier corresponding to the frequency-domain signal for the dispersion compensation value corresponding to the second communication distance.

Specifically, because the signal to which the CP has been added is a time-domain signal, the transmit end first performs Fourier transform on the signal to which the CP has been added, to obtain a frequency-domain signal, and then compensates, in frequency domain, the frequency-domain subcarrier corresponding to the obtained frequency-domain signal for the dispersion compensation value corresponding to the second communication distance.

In the dispersion compensation method provided in this embodiment of this application, the transmit end obtains the subcarrier allocation result, where the subcarrier allocation result includes the subcarriers allocated to the at least two receive ends based on the signal-to-noise ratio results of the signals transmitted between the transmit end and the at least two receive ends. Then, the transmit end compensates, based on the correspondence between a communication distance and a dispersion compensation value, for the subcarrier allocated to each receive end for the dispersion compensation value corresponding to the first communication distance, to obtain the compensated signal, adds the CP to the compensated signal, and then compensates, the frequency-domain subcarrier corresponding to the signal to which the CP has been added, for the dispersion compensation value corresponding to the second communication distance. Because the transmit end adds the CP only to the compensated signal obtained after the subcarrier allocated to each receive end is compensated for with the dispersion compensation value corresponding to the first communication distance, but does not add the CP to a signal obtained after the subcarrier allocated to each receive end is compensated for with a dispersion compensation value corresponding to an entire communication distance, not only CP overheads can be reduced and a system rate can be improved, but also compensation can be made with different dispersion compensation values for different transmission distances, to precisely compensate for link dispersion, effectively alleviate a fading phenomenon caused by fiber dispersion, and help to improve performance of an optical communication system.

The following further describes the solutions in the embodiments of this application with reference to the schematic structural diagram of the optical communication system in FIG. 7A and FIG. 7B.

A Fourier transform unit in a dispersion compensation module may perform Fourier transform on a time-domain signal generated by a signal generation module. An allocation unit may obtain a subcarrier allocation result. A compensation unit compensates, based on a correspondence relationship between a communication distance and a dispersion compensation value, for a subcarrier allocated to each receive end for a dispersion compensation value corresponding to a first communication distance, to obtain a compensated frequency-domain signal. The signals obtained by the compensation units after dispersion compensation are superimposed, and an inverse Fourier transform unit performs inverse Fourier transform on the superimposed frequency-domain signal to obtain a time-domain signal. Then, a CP addition unit adds a CP to the obtained time-domain signal. In this embodiment of this application, the CP is loaded onto the time-domain signal obtained after inverse Fourier transform, to help to improve anti-dispersion performance of an optical communication system.

The transmit end performs Fourier transform on the signal to which the CP has been added, to obtain a frequency-domain signal. A compensation unit compensates, in frequency domain, a frequency-domain subcarrier corresponding to the obtained frequency-domain signal, and sends the compensated signal to each receive end for a dispersion compensation value corresponding to a second communication distance.

The Fourier transform unit may be a Fourier transform circuit, the compensation unit may be a subcarrier phase compensation circuit, the inverse Fourier transform unit may be an inverse Fourier transform circuit, and the CP addition unit may be a CP circuit.

The following describes, in detail by using the first receive end as an example, a process in which the transmit end sends, to the first receive end, the signal that has been compensated for with the dispersion compensation value corresponding to the second communication distance. In this embodiment of this application, a process in which the transmit end sends, to the other receive end, the signal that has been compensated for with the dispersion compensation value corresponding to the second communication distance is the same as the process in which the transmit end sends, to the first receive end, the signal that has been compensated for with the dispersion compensation value corresponding to the second communication distance. Therefore, for the process in which the transmit end sends, to each of the other receive end, the signal that has been compensated for with the dispersion compensation value corresponding to the second communication distance, refer to the process in which the transmit end sends, to the first receive end, the signal that has been compensated for with the dispersion compensation value corresponding to the second communication distance. Details are not described in this embodiment of this application again.

Specifically, the transmit end may send, to the first receive end in the following manner, the signal that has been compensated for with the dispersion compensation value corresponding to the second communication distance.
A1. The transmit end converts the compensated signal into an analog signal by using a DAC, and determines a real part I of the analog signal and an imaginary part Q of the analog signal.
A2. The transmit end processes the real part I of the analog signal by using an electrical-domain driver and an attenuator, and processes the imaginary part Q of the analog signal by using the electrical-domain driver and the attenuator.
A3. The transmit end separately inputs the processed real part I of the analog signal and the processed imaginary part Q of the analog signal to a DDMZM shown in FIG. 7A and FIG. 7B, to convert the analog signal into an optical signal, and then sends the optical signal obtained through conversion to the first receive end.

Specifically, the transmit end may input the processed real part I of the analog signal to an RF port of an upper-arm PM of the DDMZM, and input the processed imaginary part Q of the analog signal to an RF port of a lower-arm PM of the DDMZM, to drive the two PMs of the DDMZM to work. An optical input port of the DDMZM receives continuous wave(continuous wave, CW for short), and the two PMs of the DDMZM convert, driven by the analog signal, the received continuous wave into the optical signal corresponding to the analog signal.

Optionally, the transmit end may separately input the processed real part I of the analog signal and the processed imaginary part Q of the analog signal to an IQMZM, to convert the analog signal into an optical signal, and then send the optical signal obtained through conversion to the first receive end.

The following describes, in detail by using the first receive end as an example, a process in which the first receive end processes the received optical signal. In this embodiment of this application, the process in which the first receive end processes the received optical signal is the same as a process in which each of the other receive end processes the received optical signal. Therefore, for the process in which each of the other receive end processes the received optical signal, refer to the process in which the first receive end processes the received optical signal. Details are not described in this embodiment of this application again.

Specifically, the first receive end may process the received optical signal in the following manner:
B 1. After receiving the optical signal, the first receive end filters out ASE noise from the received optical signal by using a filter.
B2. The first receive end converts, by using an ROSA, the optical signal from which the ASE noise is filtered out into an electrical signal.
B3. The first receive end converts, into a digital signal by using an OSC, the electrical signal obtained through conversion.
B4. The first receive end processes, by using a DSP, the digital signal obtained through conversion.

Each receive end generally parses only data information on a subcarrier allocated to the receive end.

In the dispersion compensation method provided in this embodiment of this application, the transmit end obtains the subcarrier allocation result, where the subcarrier allocation result includes the subcarriers allocated to the at least two receive ends based on the signal-to-noise ratio results of the signals transmitted between the transmit end and the at least two receive ends. Then, the transmit end compensates, based on the correspondence between a communication distance and a dispersion compensation value, for the subcarrier allocated to each receive end for the dispersion compensation value corresponding to the first communication distance, to obtain the compensated signal, adds the CP to the compensated signal, and then compensates, the frequency-domain subcarrier corresponding to the signal to which the CP has been added, for the dispersion compensation value corresponding to the second communication distance. Because the transmit end adds the CP only to the compensated signal obtained after the subcarrier allocated to each receive end is compensated for with the dispersion compensation value corresponding to the first communication distance, but does not add the CP to a signal obtained after the subcarrier allocated to each receive end is compensated for with a dispersion compensation value corresponding to an entire communication distance, not only CP overheads can be reduced and a system rate can be improved, but also compensation can be made with different dispersion compensation values for different transmission distances, to precisely compensate for link dispersion, effectively alleviate a fading phenomenon caused by fiber dispersion, and help to improve performance of an optical communication system.

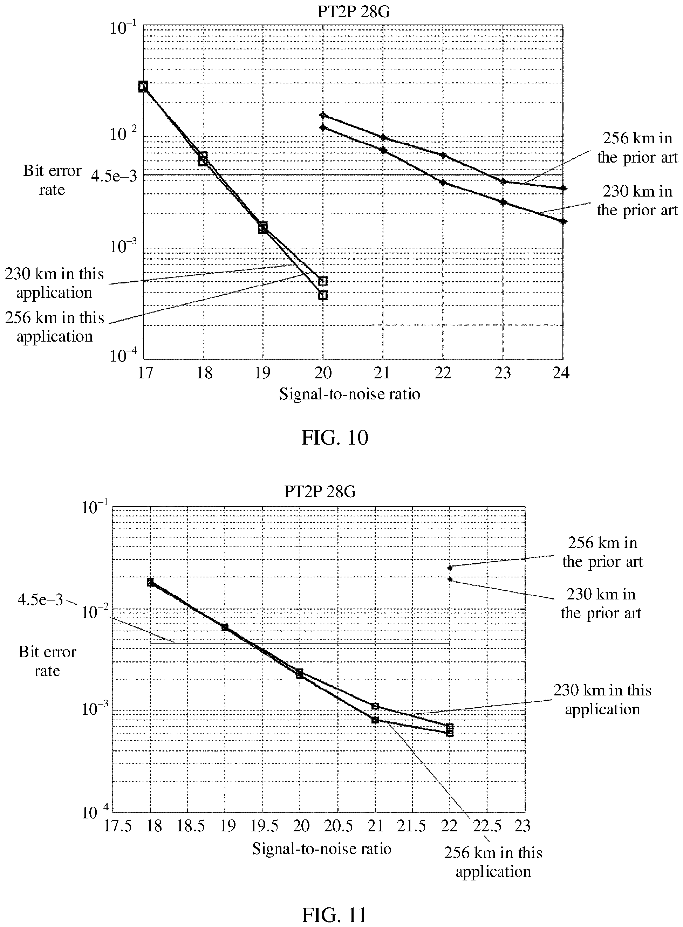

FIG. 10 is a diagram of comparison between simulation results of bit error rate-signal-to-noise ratio curves corresponding to a receive end that are obtained after dispersion compensation is performed by using a dispersion compensation method in the prior art and after dispersion compensation is performed by using a dispersion compensation method provided in the embodiments of this application. FIG. 11 is a diagram of comparison between experimental results of bit error rate-signal-to-noise ratio curves corresponding to the receive end that are obtained after dispersion compensation is performed by using the dispersion compensation method in the prior art and after dispersion compensation is performed by using the dispersion compensation method provided in the embodiments of this application. As shown in FIG. 10 and FIG. 11, a curve "256 km in the prior art" is a bit error rate-signal-to-noise ratio curve obtained after dispersion compensation is performed for a receive end with a communication distance of 256 km by using the dispersion compensation method in the prior art when a system capacity is 28 Gb/s, a curve "230 km in the prior art" is a bit error rate-signal-to-noise ratio curve obtained after dispersion compensation is performed for a receive end with a communication distance of 230 km by using the dispersion compensation method in the prior art when a system capacity is 28 Gb/s, a curve "256 km in this application" is a bit error rate-signal-to-noise ratio curve obtained after dispersion compensation is performed for a receive end with a communication distance of 256 km by using the dispersion compensation method in the embodiments of this application when a system capacity is 28 Gb/s, and a curve "230 km in this application" is a bit error rate-signal-to-noise ratio curve obtained after dispersion compensation is performed for a receive end with a communication distance of 230 km by using the dispersion compensation method in the embodiments of this application when a system capacity is 28 Gb/s. As can be learned from FIG. 10 and FIG. 11, for a same transmission distance, if a same CP length is maintained, when signal-to-noise ratio values are the same, a bit error rate obtained after dispersion compensation is performed by using the dispersion compensation method in the prior art is greater than a bit error rate obtained after dispersion compensation is performed by using the dispersion compensation method provided in the embodiments of this application. As shown in FIG. 10 and FIG. 11, compared with the prior art, the dispersion compensation method provided in the embodiments of this application improves system performance by at least 3 dB. Therefore, compared with a conventional dispersion compensation method, the dispersion compensation method provided in the embodiments of this application can reduce a bit error rate and improve system performance when CP overheads are relatively low.

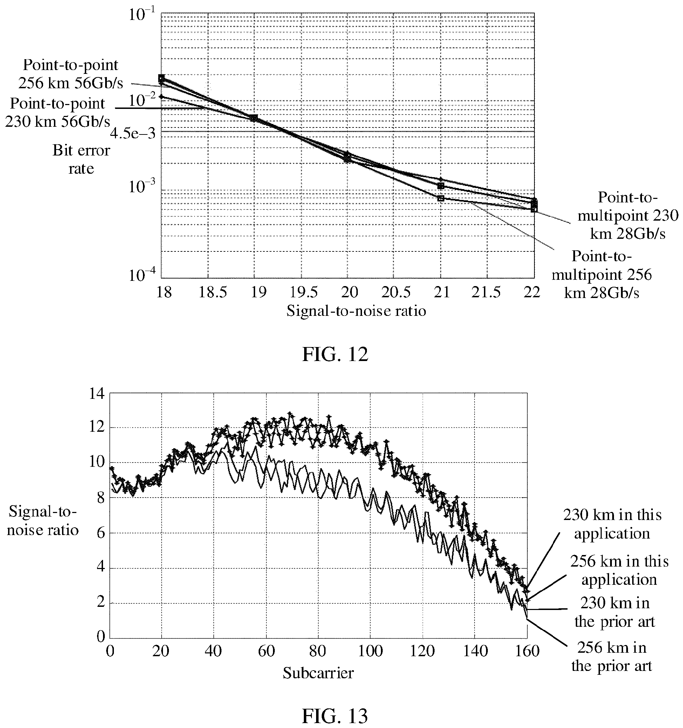

FIG. 12 is a diagram of comparison between experimental results of bit error rate-signal-to-noise ratio curves corresponding to a receive end in a point-to-multipoint case and a point-to-point case when dispersion compensation is performed. A curve "point-to-point 256 km 56 Gb/s" is a bit error rate-signal-to-noise ratio curve obtained after dispersion compensation is performed for a receive end with a communication distance of 256 km by using a point-to-point dispersion compensation method when a system capacity is 56 Gb/s, a curve "point-to-point 230 km 56 Gb/s" is a bit error rate-signal-to-noise ratio curve obtained after dispersion compensation is performed for a receive end with a communication distance of 230 km by using a point-to-point dispersion compensation method when a system capacity is 56 Gb/s, a curve "point-to-multipoint 230 km 28 Gb/s" is a bit error rate-signal-to-noise ratio curve obtained after dispersion compensation is performed for a receive end with a communication distance of 230 km by using a point-to-multipoint dispersion compensation method when a system capacity is 28 Gb/s, and a curve "point-to-multipoint 256 km 28 Gb/s" is a bit error rate-signal-to-noise ratio curve obtained after dispersion compensation is performed for a receive end with a communication distance of 256 km by using a point-to-multipoint dispersion compensation method when a system capacity is 28 Gb/s. As can be learned from FIG. 12, for a same capacity, when dispersion compensation is performed by using an IQMZM, system performance does not differ greatly when dispersion compensation is performed in a point-to-point manner and a point-to-multipoint manner, thereby achieving ideal performance.

FIG. 13 is a diagram of comparison between simulation results of signal-to-noise ratio-subcarrier curves corresponding to a receive end that are obtained after dispersion compensation is performed by using the dispersion compensation method in the prior art and the dispersion compensation method provided in the embodiments of this application. A curve "256 km in the prior art" is a signal-to-noise ratio-subcarrier curve obtained after dispersion compensation is performed for a receive end with a communication distance of 256 km by using the dispersion compensation method in the prior art, a curve "230 km in the prior art" is a signal-to-noise ratio-subcarrier curve obtained after dispersion compensation is performed for a receive end with a communication distance of 230 km by using the dispersion compensation method in the prior art, a curve "256 km in this application" is a signal-to-noise ratio-subcarrier curve obtained after dispersion compensation is performed for a receive end with a communication distance of 256 km by using the dispersion compensation method in the embodiments of this application, and a curve "230 km in this application" is a signal-to-noise ratio-subcarrier curve obtained after dispersion compensation is performed for a receive end with a communication distance of 230 km by using the dispersion compensation method in the embodiments of this application. As can be learned from FIG. 13, when dispersion compensation is performed by using an IQMZM, dispersion can be completely compensated for, and SNR curves basically overlap after dispersion is completely compensated for. Therefore, in this embodiment of this application, when dispersion compensation is performed by using the IQMZM, subcarriers allocated by a transmit end to receive ends may be allocated randomly, provided that a system requirement can be met.

It should be noted that the results in FIG. 10 to FIG. 13 are all obtained when dispersion compensation is performed by using the IQMZM.

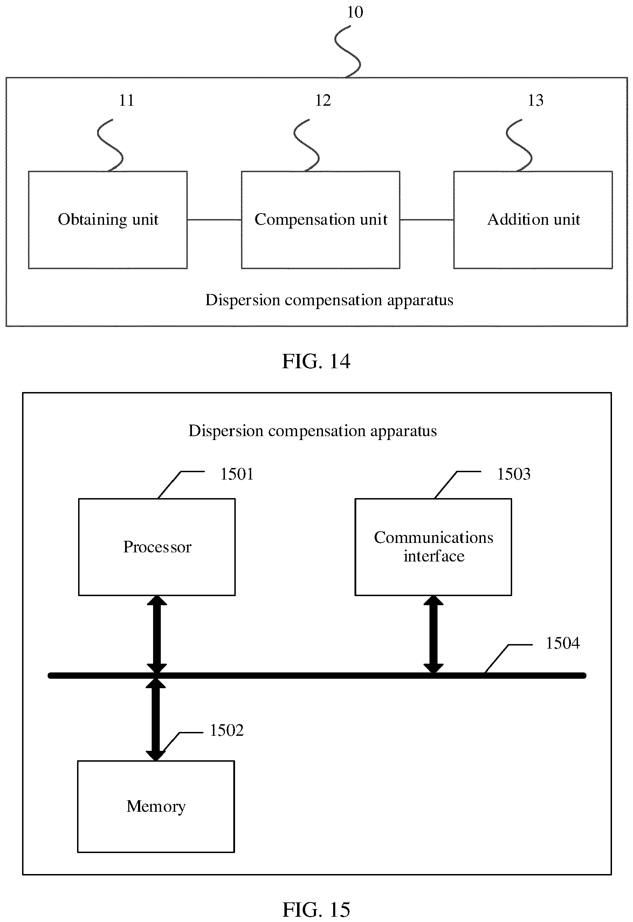

FIG. 14 is a schematic structural diagram of a dispersion compensation apparatus 10 according to an embodiment of this application. As shown in FIG. 14, the dispersion compensation apparatus 10 may include:
an obtaining unit 11, configured to obtain a subcarrier allocation result, where the subcarrier allocation result includes subcarriers allocated to the at least two receive ends based on signal-to-noise ratio results of signals transmitted between a transmit end and the at least two receive ends;
a compensation unit 12, configured to compensate,based on a correspondence between a communication distance and a dispersion compensation value, for a subcarrier allocated to each receive end for a dispersion compensation value corresponding to the first communication distance, to obtain a compensated signal; and
an addition unit 13, configured to add a cyclic prefix CP to the compensated signal, where
the compensation unit 12 is further configured to compensate, a frequency-domain subcarrier corresponding to the signal to which the CP has been added, for a dispersion compensation value corresponding to the second communication distance.

Optionally, the second communication distance is a smallest value in distances between the receive ends and the transmit end.

Optionally, the compensation unit 12 is specifically configured to:
determine, based on the correspondence between a communication distance and a dispersion compensation value, the dispersion compensation value corresponding to the first communication distance; and
compensate, in frequency domain, the subcarrier allocated to each receive end for the dispersion compensation value corresponding to the first communication distance.

Optionally, the compensated signal is a frequency-domain signal; and
the addition unit 13 is specifically configured to:
perform inverse Fourier transform on the frequency-domain signal, to obtain a time-domain signal; and
add the CP to the time-domain signal.

Optionally, the compensation unit 12 is specifically configured to:
perform Fourier transform on the signal to which the CP has been added, to obtain a frequency-domain signal; and
compensate, in frequency domain, the subcarrier corresponding to the frequency-domain signal for the dispersion compensation value corresponding to the second communication distance.

In the embodiments of this application, module division is an example, and is merely logical function division. In an actual implementation, there may be another division manner. In addition, function modules in the embodiments of this application may be integrated into one processor, or each of the modules may exist alone physically, or two or more modules may be integrated into one module. The integrated module may be implemented in a form of hardware, or may be implemented in a form of a software functional module.

When the integrated module may be implemented in a form of hardware, as shown in FIG. 15, the dispersion compensation apparatus may include a processor 1501, a memory 1502, and a communications interface 1503. Physical hardware corresponding to the obtaining unit 11, the compensation unit 12, and the addition unit 13 may be the processor 1501. The processor 1501 may be a central processing unit (central processing unit, CPU for short), a digital processing unit, or the like. The processor 1501 receives and sends data by using the communications interface 1503. The memory 1502 is configured to store a program executed by the processor 1501.

Specific connection media between the processor 1501, the memory 1502, and the communications interface 1503 is not limited in this embodiment of this application. In this embodiment of this application, in FIG. 15, the memory 1502, the processor 1501, and the communications interface 1503 are connected by using a bus 1504. The bus is represented by using a thick line in FIG. 15. A connection manner between other components is merely an example description, but does not constitute a limitation. The bus may be classified into an address bus, a data bus, a control bus, and the like. For ease of representation, only one thick line is used to represent the bus in FIG. 15, but this does not mean that there is only one bus or only one type of bus.

The memory 1502 may be a volatile memory (volatile memory), for example, a random access memory (random access memory, RAM for short). Alternatively, the memory 1502 may be a non-volatile memory (non-volatile memory), for example, a read-only memory (read-only memory, ROM for short), a flash memory (flash memory), a hard disk drive (hard disk drive, HDD for short), or a solid-state drive (solid-state drive, SSD for short). Alternatively, the memory 1502 is, but not limited to, any other medium capable of carrying or storing expected program code having an instruction or data structure form and capable of being accessed by a computer. The memory 1502 may be a combination of the foregoing memories.

The processor 1501 is configured to execute the program code stored in the memory 1502, and is specifically configured to perform the method described in the embodiments corresponding to FIG. 1 to FIG. 9. For details, refer to the embodiments corresponding to FIG. 1 to FIG. 9, and details are not described herein again.

The embodiments described herein are merely used to describe and explain this application, but are not used to limit this application. In a case of no conflict, the embodiments of this application and function modules in the embodiments may be combined.

In this embodiment of this application, the transmit end obtains the subcarrier allocation result, where the subcarrier allocation result includes the subcarriers allocated to the at least two receive ends based on the signal-to-noise ratio results of the signals transmitted between the transmit end and the at least two receive ends. Then, the transmit end compensates, based on the correspondence between a communication distance and a dispersion compensation value, for the subcarrier allocated to each receive end, to obtain the compensated signal for the dispersion compensation value corresponding to the first communication distance, adds the CP to the compensated signal, and then compensates, the frequency-domain subcarrier corresponding to the signal to which the CP has been added, for the dispersion compensation value corresponding to the second communication distance. Because the transmit end adds the CP only to the compensated signal obtained after the subcarrier allocated to each receive end is compensated for with the dispersion compensation value corresponding to the first communication distance, but does not add the CP to a signal obtained after the subcarrier allocated to each receive end is compensated for with a dispersion compensation value corresponding to an entire communication distance, not only CP overheads can be reduced and a system rate can be improved, but also compensation can be made with different dispersion compensation values for different transmission distances, to precisely compensate for link dispersion, effectively alleviate a fading phenomenon caused by fiber dispersion, and help to improve performance of an optical communication system.

This application further provides a storage medium, including a readable storage medium and a computer program. The computer program is used to implement the dispersion compensation method provided in any one of the foregoing embodiments.

This application further provides a program product. The program product includes a computer program (namely, an executable instruction). The computer program is stored in a readable storage medium. At least one processor of a transmit end may read the computer program from the readable storage medium, and the at least one processor executes the computer program to enable the transmit end to perform the dispersion compensation method provided in any one of the foregoing implementations.

An embodiment of this application further provides a dispersion compensation apparatus, including at least one storage component and at least one processing component. The at least one storage component is configured to store a program. When the program is executed, the dispersion compensation apparatus is enabled to perform operations of the transmit end in any one of the foregoing embodiments.

All or some of the steps of the foregoing method embodiments may be implemented by using a program instructing related hardware. The foregoing program may be stored in a readable memory. When the program is executed, the steps of the method in the embodiments are performed. The memory (a storage medium) includes: a read-only memory (read-only memory, ROM), a RAM, a flash memory, a hard disk, a solid state disk, a magnetic tape (magnetic tape), a floppy disk (floppy disk), an optical disc (optical disc), and any combination thereof.

## Claims

1. A dispersion compensation method, wherein the method is applied to a transmit end, the transmit end communicates with at least two receive ends, communication distances between the transmit end and the at least two receive ends are different, the communication distance between the transmit end and each receive end comprises a first communication distance and a second communication distance, and the method comprises:
obtaining, by the transmit end, a subcarrier allocation result, wherein the subcarrier allocation result comprises subcarriers allocated to the at least two receive ends based on signal-to-noise ratio results of signals transmitted between the transmit end and the at least two receive ends;
compensating, by the transmit end based on a correspondence between a communication distance and a dispersion compensation value, a subcarrier allocated to each receive end for a dispersion compensation value corresponding to the first communication distance, to obtain a compensated signal;
adding, by the transmit end, a cyclic prefix CP to the compensated signal; and
compensating, by the transmit end, a frequency-domain subcarrier corresponding to the signal to which the CP has been added, for a dispersion compensation value corresponding to the second communication distance.

2. The method according to claim 1, wherein the second communication distance is a smallest value in distances between the transmit end and the receive ends.

3. The method according to claim 1 or 2, wherein the compensating, by the transmit end based on a correspondence between a communication distance and a dispersion compensation value, a subcarrier allocated to each receive end for a dispersion compensation value corresponding to the first communication distance comprises:
determining, by the transmit end based on the correspondence between a communication distance and a dispersion compensation value, the dispersion compensation value corresponding to the first communication distance; and
compensating, by the transmit end in frequency domain, the subcarrier allocated to each receive end for the dispersion compensation value corresponding to the first communication distance.

4. The method according to any one of claims 1 to 3, wherein the compensated signal is a frequency-domain signal;
the adding, by the transmit end, a cyclic prefix CP to the compensated signal comprises:
performing, by the transmit end, inverse Fourier transform on the frequency-domain signal, to obtain a time-domain signal; and
adding, by the transmit end, the CP to the time-domain signal.

5. The method according to any one of claims 1 to 4, wherein the compensating, by the transmit end, a frequency-domain subcarrier corresponding to the signal to which the CP has been added, for a dispersion compensation value corresponding to the second communication distance comprises:
performing, by the transmit end, Fourier transform on the signal to which the CP has been added, to obtain a frequency-domain signal; and
compensating, by the transmit end in frequency domain, the frequency-domain subcarrier corresponding to the frequency-domain signal for the dispersion compensation value corresponding to the second communication distance.

6. A chromatic dispersion compensation apparatus, comprising:
an obtaining unit, configured to obtain a subcarrier allocation result, wherein the subcarrier allocation result comprises subcarriers allocated to at least two receive ends based on signal-to-noise ratio results of signals transmitted between a transmit end and the at least two receive ends;
a compensation unit, configured to compensate, based on a correspondence between a communication distance and a dispersion compensation value, a subcarrier allocated to each receive end for a dispersion compensation value corresponding to a first communication distance, to obtain a compensated signal; and
an addition unit, configured to add a cyclic prefix CP to the compensated signal, wherein
the compensation unit is further configured to compensate, a frequency-domain subcarrier corresponding to the signal to which the CP has been added, for a dispersion compensation value corresponding to a second communication distance.

7. The apparatus according to claim 6, wherein the second communication distance is a smallest value in distances between the transmit end and the receive ends.

8. The apparatus according to claim 6 or 7, wherein the compensation unit is specifically configured to:
determine, based on the correspondence between a communication distance and a dispersion compensation value, the dispersion compensation value corresponding to the first communication distance; and
compensate, in frequency domain, the subcarrier allocated to each receive end for the dispersion compensation value corresponding to the first communication distance.

9. The method according to any one of claims 6 to 8, wherein the compensated signal is a frequency-domain signal;
the addition unit is specifically configured to:
perform inverse Fourier transform on the frequency-domain signal, to obtain a time-domain signal; and
add the CP to the time-domain signal.

10. The apparatus according to any one of claims 6 to 9, wherein the compensation unit is specifically configured to:
perform Fourier transform on the signal to which the CP has been added, to obtain a frequency-domain signal; and
compensate, in frequency domain, the subcarrier corresponding to the frequency-domain signal for the dispersion compensation value corresponding to the second communication distance.

11. A transmit end, comprising: a memory and a processor, wherein the memory is configured to store a computer program, and the computer program is run on the processor, to enable the transmit end to implement the method according to any one of claims 1 to 5.

12. A storage medium, wherein the storage medium comprises a computer program, and the computer program is configured to implement the method according to any one of claims 1 to 5.

13. A transmit end, comprising: a memory and a processor, wherein the memory is configured to store a computer program, and the computer program is run on the processor, to enable the transmit end to implement the method according to any one of claims 1 to 5.
